# EUROPÄISCHE PATENTSCHRIFT

(11) **EP 2 711 671 B1**
(45) Veröffentlichungstag und Bekanntmachung des Hinweises auf die Patenterteilung: **29.08.2018**
(21) Anmeldenummer: 13172942.8
(22) Anmeldetag: 20.06.2013
(51) Int. Cl.: G01D 5/244, G01D 5/245

(54) **Positionsmessgerät und Verfahren zu dessen Betrieb**
Positioning device and method for its operation
Appareil de mesure de position et son procédé de fonctionnement

(30) Priorität: 20.09.2012 DE 102012216854
(43) Veröffentlichungstag der Anmeldung: 26.03.2014
(73) Patentinhaber: Dr. Johannes Heidenhain GmbH, 83301 Traunreut (DE)
(72) Erfinder: Oberhauser, Johann, 83377 Vachendorf (DE); Schmied, Bernhard, 84529 Tittmoning (DE); Rosenlehner-Emde, Jannik Jens, 83119 Obing (DE); Schwaiger, Werner, 83324 Ruhpolding (DE); Schweizer, Thomas, 83374 Traunwalchen (DE); Mayer, Hubert, 83308 Trostberg (DE); Tiemann, Marc Oliver, A-5020 Salzburg (AT)

(56) Entgegenhaltungen:
- EP-A2- 1 906 153
- DE-A1- 19 628 833
- US-A1- 2002 020 070
- US-A1- 2011 147 572

## Beschreibung

Die Erfindung betrifft ein Positionsmessgerät zur Bestimmung von absoluten Positionswerten, das zwei weitgehend voneinander unabhängig generierte Positionswerte liefert, gemäß dem Anspruch 1 und ein entsprechendes Verfahren zum Betrieb eines derartigen Positionsmessgeräts gemäß dem Anspruch 9.

Positionsmessgeräte umfassen hauptsächlich Drehgeber, bzw. Winkelmessgeräte, sowie Längenmessgeräte. Drehgeber werden häufig als Messgeräte für elektrische Antriebe, insbesondere zur Bestimmung der absoluten Winkellage von Motor- oder Antriebswellen, eingesetzt. Längenmessgeräte dienen zur Erfassung von linearen Bewegungen, beispielsweise eines Werkzeugschlittens in einer Werkzeugmaschine. Für Einzelheiten hinsichtlich des Aufbaus derartiger Positionsmessgeräte wird beispielhaft auf das Fachbuch von Alfons Ernst, Digitale Längen- und Winkelmesstechnik, Verlag Moderne Industrie (1989) verwiesen.

Zur Erzeugung eines absoluten Positionswerts sind auf einem Codeträger Teilungsspuren vorgesehen, die von einer Detektoranordnung in einer Messrichtung zur Generierung von Positionssignalen abgetastet werden. Die Positionssignale werden wiederum zu einem absoluten Positionswert weiterverarbeitet.

Bei den Teilungsspuren unterscheidet man grundsätzlich inkrementale und absolute Teilungsspuren. Inkrementale Teilungsspuren bestehen aus einer Vielzahl von in der Messrichtung in gleichen Abständen hintereinander angeordneten Teilungselementen, aus deren Abtastung relative Positionsänderungen erfasst werden können. Bei absoluten Teilungsspuren dagegen sind die Teilungselemente so angeordnet, dass zu jedem Zeitpunkt ein absoluter Positionswert erfasst werden kann. Es sind absolute Teilungsspuren bekannt, die mehrere parallel zueinander angeordnete Codespuren umfassen, die absolute Position also parallel codiert ist. Weiter sind absolute Teilungsspuren bekannt, bei denen die Absolutposition seriell, in Form eines Kettencodes codiert ist. Mit inkrementalen Teilungsspuren werden prinzipiell höhere Auflösungen erreicht, während absolute Teilungsspuren den Vorteil aufweisen, zu jedem Zeitpunkt, auch unmittelbar nach dem Einschalten des Positionsmessgeräts, einen absoluten Positionswert ermitteln zu können.

Zur Bildung eines hochauflösenden, absoluten Positionsmessgeräts kann zum einen eine inkrementale Teilungsspur parallel zu einer absoluten Teilungsspur vorgesehen werden. Somit wird der absolute Bezug mit der absoluten Teilungsspur hergestellt und die hohe Auflösung in Verbindung mit der inkrementalen Teilungsspur erreicht. Die absolute Teilungsspur kann parallel oder seriell codiert sein, sie kann aber so ausgestaltet sein, dass bei der Abtastung ein analoges Abtastsignal gebildet wird, mit dem auf die Absolutposition geschlossen werden kann. So ist in der DE 197 51 853 A1 beispielsweise ein Aufbau für einen induktiven Drehgeber beschrieben, bei dem die Abtastung einer inneren Teilungsspur je Umdrehung genau eine Periode einer sinusförmigen Schwingung ergibt. Der Phasenwinkel der inneren Teilungsspur in Verbindung mit einer inkrementalen, äußeren Teilungsspur ergibt einen hochauflösenden absoluten Positionswert.

Zum anderen kann ein absolutes Positionsmessgerät gebildet werden, indem zwei oder mehr inkrementale Teilungsspuren parallel zueinander vorgesehen werden, die eine unterschiedliche Teilungsperiode aufweisen und die so dimensioniert sind, dass innerhalb des Messbereichs (bei einem Drehgeber eine Umdrehung der Welle) die Absolutposition eindeutig anhand des Phasenwinkels der Abtastsignale festgestellt werden kann. Grundlagen dieser Technik sind beispielsweise der DE 41 25 865 A1 zu entnehmen. EP1 906 153 A2 beschreibt einen anderen auf dem induktiven Abtastprinzip basierenden Drehgeber, mit inkrementalen und absoluten Teilungsspuren. Insbesondere unter sicherheitstechnischen Gesichtspunkten ist es wichtig, dass Positions- bzw. Winkelwerte, die vom Positionsmessgerät ermittelt und an eine Folgeelektronik, z.B. eine numerische Steuerung, weitergegeben werden, sicher sind, d.h. dass auch bei einem technischen Defekt im Positionsmessgerät möglichst noch ein verwendbarer Positions- bzw. Winkelwert erzeugt wird, oder zumindest der Defekt entweder im Positionsmessgerät bereits erkannt und an die numerische Steuerung gemeldet wird, oder in der numerischen Steuerung anhand der vom Positionsmessgerät empfangenen Positions- bzw. Winkelwerte erkennbar ist.

In diesem Zusammenhang ist es bekannt, im Positionsmessgerät zwei voneinander unabhängige Messwerte zu erzeugen, indem zwei identische Positionserfassungseinheiten mit entsprechenden Detektoren und Signalverarbeitungsschaltungen vorgesehen werden. Derartige Lösungen sind allerdings sehr aufwendig und sollen daher vermieden werden.

Der Erfindung liegt die Aufgabe zugrunde, einen sicheres Positionsmessgerät zu schaffen, welches einfach aufgebaut ist. Ferner liegt der Erfindung die Aufgabe zugrunde, ein Verfahren zum Betreiben eines derartigen sicheren Positionsmessgeräts zu schaffen.

Der erste Teil dieser Aufgabe wird erfindungsgemäß durch ein Positionsmessgerät gelöst, das die Merkmale des Anspruches 1 aufweist. Erfindungsgemäß umfasst das Positionsmessgerät
- einen Codeträger mit wenigstens einer ersten Teilungsspur und einer zweiten Teilungsspur, wobei die zweite Teilungsspur eine Inkrementalteilungsspur ist,
- eine erste Detektoranordnung zur Erzeugung von ersten Positionssignalen durch Abtastung der ersten Teilungsspur und der zweiten Teilungsspur in einer Messrichtung,
- eine zweite Detektoranordnung zur Erzeugung von zweiten Positionssignalen durch Abtastung der zweiten Teilungsspur in einer Messrichtung,
- eine erste Positionsverarbeitungseinheit zur Verarbeitung der ersten Positionssignale zu einem ersten absoluten Positionswert und
- eine zweite Positionsverarbeitungseinheit zur Verarbeitung der zweiten Positionssignale zu einem zweiten absoluten Positionswert,
wobei die zweite Positionsverarbeitungseinheit mit einem absoluten Hilfspositionswert initialisierbar ist, der der zweiten Positionsverarbeitungseinheit von der ersten Positionsverarbeitungseinheit zugeführt ist.

Der zweite Teil der Aufgabe wird erfindungsgemäß durch ein Verfahren zum Betreiben eines Positionsmessgeräts gemäß Anspruch 9 gelöst.

Es wird ein Verfahren zum Betreiben eines Positionsmessgeräts, das
- einen Codeträger mit wenigstens einer ersten Teilungsspur und einer zweiten Teilungsspur, wobei die zweite Teilungsspur eine Inkrementalteilungsspur ist,
- eine erste Detektoranordnung zur Erzeugung von ersten Positionssignalen durch Abtastung der ersten Teilungsspur und der zweiten Teilungsspur in einer Messrichtung,
- eine zweite Detektoranordnung zur Erzeugung von zweiten Positionssignalen durch Abtastung der zweiten Teilungsspur in einer Messrichtung,
- eine erste Positionsverarbeitungseinheit zur Verarbeitung der ersten Positionssignale zu einem ersten absoluten Positionswert und
- eine zweite Positionsverarbeitungseinheit zur Verarbeitung der zweiten Positionssignale zu einem zweiten absoluten Positionswert,
umfasst, vorgeschlagen, bei dem die zweite Positionsverarbeitungseinheit in einer Initialisierungsphase mit einem absoluten Hilfspositionswert initialisiert wird, der der zweiten Positionsverarbeitungseinheit von der ersten Positionsverarbeitungseinheit zugeführt wird.

Weitere Einzelheiten und Vorteile des erfindungsgemäßen Positionsmessgeräts, sowie des Verfahrens zu dessen Betrieb ergeben sich aus der nachfolgenden Beschreibung anhand der beiliegenden Figuren.

Es zeigen die
- Figur 1: eine Draufsicht auf eine Codescheibe eines induktiven Drehgebers,
- Figur 2: eine Draufsicht auf eine Abtastleiterplatte eines induktiven Drehgebers,
- Figur 3a: einen Signalverlauf des Erregerstroms in den Erregerwindungen,
- Figur 3b: einen Signalverlauf der induzierten Spannung in Detektorwindungen,
- Figur 4: eine Schnittdarstellung eines Drehgebers,
- Figur 5: ein schematisches Schaltbild einer ersten Ausführungsform eines erfindungsgemäßen Positionsmessgeräts,
- Figur 6: ein schematisches Schaltbild einer zweiten Ausführungsform eines erfindungsgemäßen Positionsmessgeräts und
- Figur 7: ein schematisches Schaltbild einer dritten Ausführungsform eines erfindungsgemäßen Positionsmessgeräts.

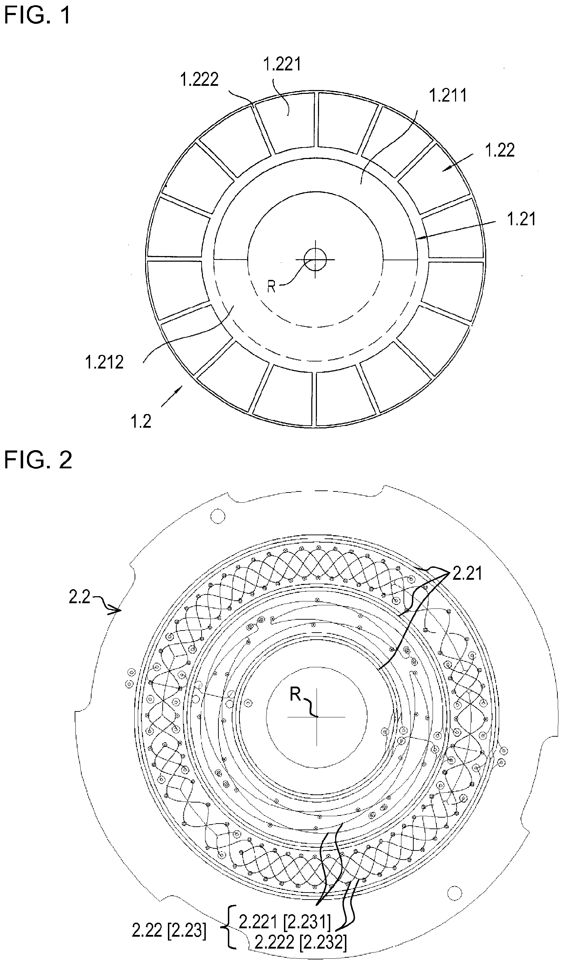

In den Figuren 1, 2 und 4 ist der prinzipielle Aufbau eines erfindungsgemäßen Positionsmessgerätes in Form eines Drehgebers gezeigt, der nach dem induktiven Messprinzip arbeitet. Eine detaillierte Beschreibung eines derartigen Drehgebers ist beispielsweise in der DE 197 51 853 A1 enthalten, auf die hier ausdrücklich Bezug genommen wird. Es sei aber an dieser Stelle ausdrücklich darauf hingewiesen, dass die vorliegende Erfindung nicht auf dieses Messprinzip eingeschränkt ist.

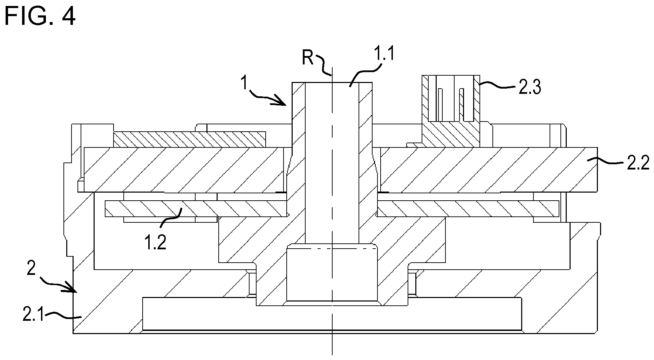

Gemäß der Figur 4 weist der Drehgeber einen Rotor 1 und einen Stator 2 auf. Im vorgestellten Ausführungsbeispiel umfasst der Rotor 1 eine Welle 1.1, welche beispielsweise an einer zu messenden Motorwelle drehfest montiert werden kann. An einem Absatz der Welle 1.1 ist zur Erfassung ihrer Winkellage ein Codeträger 1.2 in Form einer Codescheibe 1.2 mit - in der Figur 4 nicht dargestellten - Teilungsspuren 1.21, 1.22 drehfest festgelegt.

Der Stator 2 umfasst ein Gehäuse 2.1, an dem als Trägerkörper eine ringförmige Abtastleiterplatte 2.2 befestigt ist. Unter anderem ist auf der Abtastleiterplatte 2.2 ein Steckverbinder 2.3 montiert, durch welchen Signale und elektrische Leistung übertragen werden können. Der Rotor 1 und der Stator 2, bzw. die Welle 1.1 und das Gehäuse 2.1 sind um ein Drehachse R relativ zueinander drehbar.

In der Figur 1 ist die Codescheibe 1.2 in einer Draufsicht gezeigt. Die Codescheibe 1.2 besteht aus einem Substrat, welches im dargestellten Ausführungsbeispiel aus Epoxidharz hergestellt ist und auf dem zwei Teilungsspuren 1.21, 1.22 angeordnet sind. Die Teilungsspuren 1.21, 1.22 sind ringförmig ausgebildet und bezüglich der Drehachse R konzentrisch mit unterschiedlichem Durchmesser auf dem Substrat angeordnet. Die beiden Teilungsspuren 1.21, 1.22 bestehen jeweils aus einer periodischen Abfolge von alternierend angeordneten elektrisch leitfähigen Teilungsbereichen 1.211, 1.221 und nichtleitfähigen Teilungsbereichen 1.212, 1.222. Als Material für die elektrisch leitfähigen Teilbereiche 1.211, 1.221 wurde im gezeigten Beispiel Kupfer auf das Substrat aufgebracht. In den nichtleitfähigen Teilungsbereichen 1.212, 1.222 ist das Substrat 2.3 dagegen nicht beschichtet.

Die innere Teilungsspur 1.21 besteht in der dargestellten Ausführungsform aus einem ersten halbringförmigen Teilungsbereich 1.211 mit elektrisch leitfähigem Material, hier Kupfer, sowie einem zweiten halbringförmigen Teilungsbereich 1.212, in dem kein leitfähiges Material angeordnet ist.

Radial benachbart zur ersten Teilungsspur 1.21 liegt die zweite Teilungsspur 1.22 auf dem Substrat, wobei die Teilungsspur 1.22 aus einer Vielzahl elektrisch leitfähiger Teilungsbereiche 1.221 sowie dazwischen angeordneten nichtleitfähigen Teilungsbereichen 1.222 besteht. Die verschiedenen Teilungsbereiche 1.221, 1.222 sind materialmäßig dabei ebenso ausgebildet wie die Teilungsbereiche 1.211, 1.212 der ersten Teilungsspur 1.21. Insgesamt umfasst die zweite Teilungsspur 1.22 im dargestellten Ausführungsbeispiel sechzehn periodisch angeordnete, elektrisch leitfähige Teilungsbereiche 1.221, sowie entsprechend sechzehn dazwischen angeordnete nichtleitfähige Teilungsbereiche 1.222.

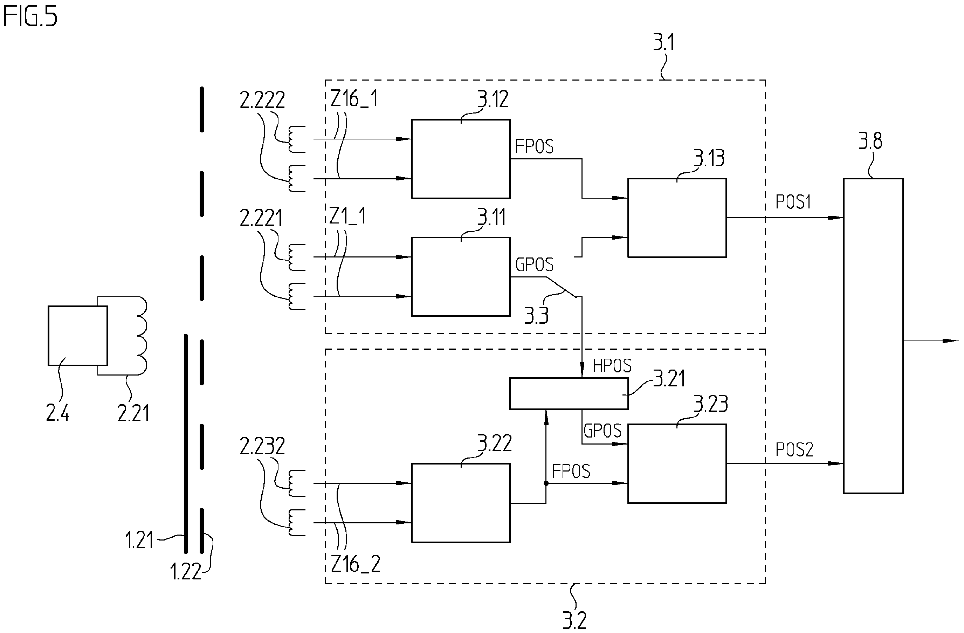

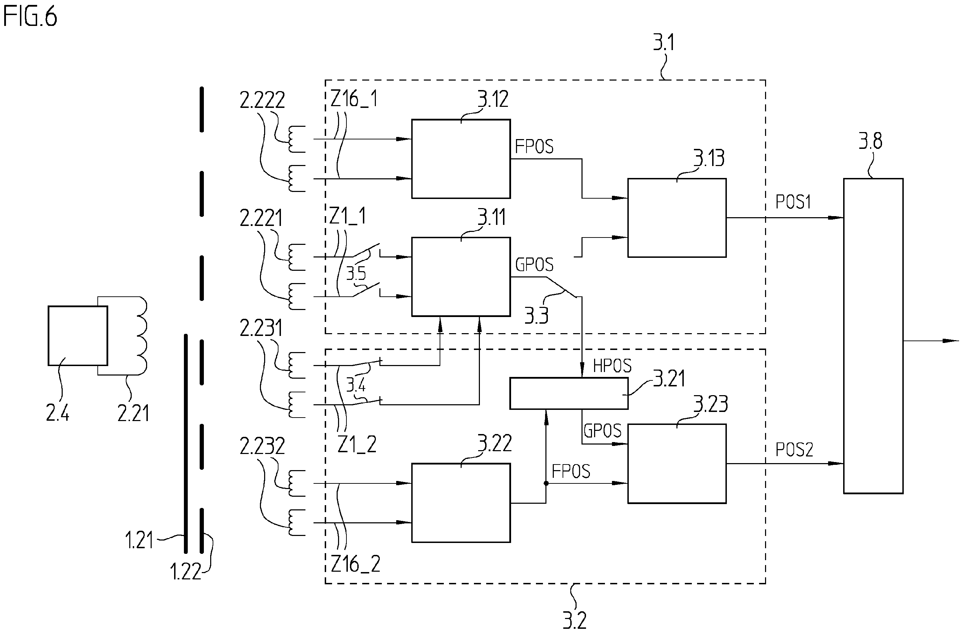

Wie anhand der Figuren 5 und 6 gezeigt werden wird, kann durch Abtastung der ersten Teilungsspur 1.21 eine Absolutposition des Rotors 1, bzw. der Welle 1.1 bezogen auf den Stator 2, bzw. die Abtastleiterplatte 2.2 ermittelt werden. Aus diesem Grund ist die erste Teilungsspur 1.21 eine Absolutteilungsspur 1.21. Bei der Abtastung der zweiten Teilungsspur 1.22 dagegen ergibt sich während einer Umdrehung des Rotors 1, bzw. der Welle 1.1 ein Positionssignal, das eine Vielzahl von Perioden aufweist. Die zweite Teilungsspur 1.22 ist daher eine Inkrementalteilungsspur 1.22. Die in Figur 2 gezeigte, zur Abtastung der Codescheibe 1.2 vorgesehene Abtastleiterplatte 2.2 dient als Trägerkörper unter anderem für eine erste Detektoranordnung 2.22, welche aus verschiedenen Empfängerspulen 2.22 besteht. Diese Empfängerspulen 2.22 weisen in einer inneren Empfängerspur Empfängerleiterbahnen 2.221 und in einer äußeren Empfängerspur weitere Empfängerleiterbahnen 2.222 auf. Zusammengehörige Paare der Empfängerleiterbahnen 2.221, 2.222 einer jeweiligen Empfängerspur sind hierbei relativ zueinander versetzt, so dass diese um 90° phasenversetzte Signale liefern können.

Neben der ersten Detektoranordnung 2.22 weist die Abtastleiterplatte 2.2 noch eine zweite Detektoranordnung 2.23 auf. Diese umfasst ebenfalls in einer inneren Empfängerspur Empfängerleiterbahnen 2.231 und in einer äußeren Empfängerspur weitere Empfängerleiterbahnen 2.232. Zusammengehörige Paare der Empfängerleiterbahnen 2.231, 2.232 einer jeweiligen Empfängerspur sind auch bei der zweiten Detektoranordnung 2.23 relativ zueinander versetzt und liefern ebenfalls um 90° phasenversetzte Signale.

Um die Empfängerleiterbahnen 2.221, 2.222 der ersten Detektoranordnung 2.22 und die Empfängerleiterbahnen 2.231, 2.232 der zweiten Detektoranordnung 2.23 übereinander anordnen zu können, ist die Abtastleiterplatte 2.2 in bekannter Technik mehrlagig ausgeführt. Um die Darstellung zu vereinfachen, wurde die zweite Detektoranordnung 2.23 mit den dazugehörenden Empfängerleiterbahnen 2.231, 2.232 nicht explizit dargestellt, sondern lediglich deren Bezugszeichen neben den korrespondierenden Bezugszeichen der ersten Detektoranordnung 2.22, bzw. den Empfängerleiterbahnen 2.221, 2.222, in eckigen Klammern angegeben.

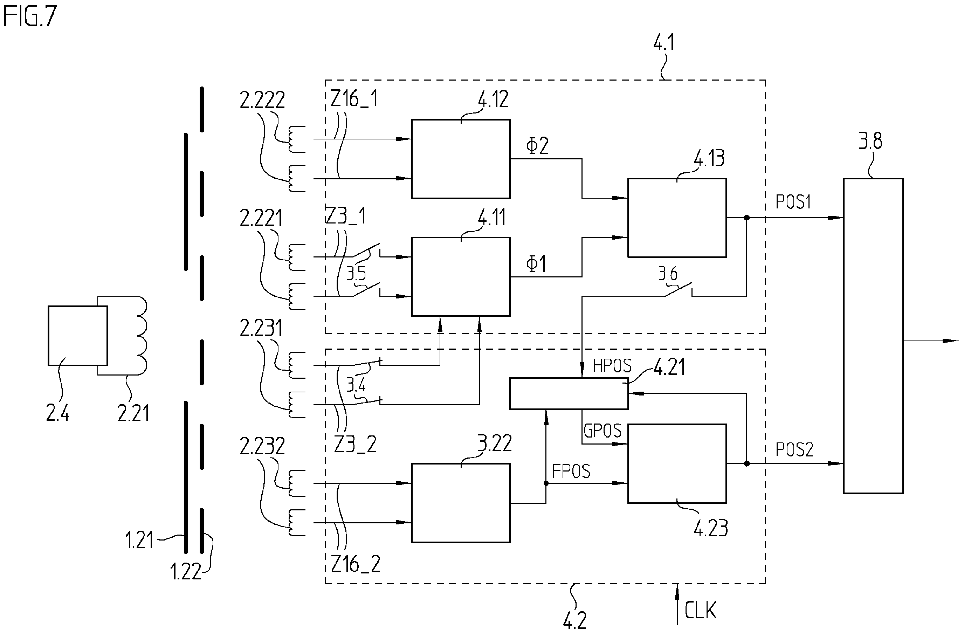

Wie weiter unten gezeigt, sind die Empfängerleiterbahnen 2.231 optional und lediglich in den anhand der Figuren 6 und 7 beschriebenen Ausführungsbeispielen eines erfindungsgemäßen Drehgebers vorhanden.

Neben den Leiterbahnen der Detektoranordnungen 2.22, 2.23 sind als Erregerwindungen auf der Abtastleiterplatte 2.2 Erregerleiterbahnen 2.21 vorgesehen, welche auf einer inneren, einer mittleren und einer äußeren Erregerspur aufgebracht sind. Die Abtastleiterplatte 2.2 selbst weist eine zentrische Bohrung auf und ist, wie bereits erwähnt, als eine Leiterplatte, welche mehrere Lagen aufweist, ausgeführt.

Im zusammengebauten Zustand stehen sich die Codescheibe 1.2 und die Abtastleiterplatte 2.2 gegenüber, so dass die Achse R durch die Mittelpunkte beider Elemente verläuft und bei einer Relativdrehung zwischen Codescheibe 1.2 und Abtastleiterplatte 2.2 in den Empfängerleiterbahnen 2.221, 2.222 der ersten Detektoranordnung 2.22 und in den Empfängerleiterbahnen 2.231, 2.232 der zweiten Detektoranordnung 2.23 der Abtastleiterplatte 2.2 von der jeweiligen Winkelstellung abhängige Positionssignale durch Induktionseffekte erzeugbar sind.

Die Empfängerleiterbahnen 2.221, 2.222, 2.231, 2.232 stellen somit Positionsdetektoren 2.221, 2.222, 2.231, 2.232 dar. Wie bereits erwähnt, ist die vorliegende Erfindung unabhängig vom physikalischen Abtastprinzip. Kommt beispielsweise anstatt des induktiven ein optisches Abtastprinzip zur Realisierung, können die Positionsdetektoren 2.221, 2.222, 2.231, 2.232 als Photoelemente ausgeführt sein, beim magnetischen Abtastprinzip kämen Magnetsensoren (z.B. Hallelemente oder MR-Sensoren) zum Einsatz. Bei allgemeiner Betrachtungsweise sind die Empfängerleiterbahnen 2.221 erste Positionsdetektoren 2.221 und die Empfängerleiterbahnen 2.222 zweite Positionsdetektoren 2.222 der ersten Detektoranordnung 2.22. Analog dazu sind die Empfängerleiterbahnen 2.231 erste Positionsdetektoren 2.231 und die Empfängerleiterbahnen 2.232 zweite Positionsdetektoren 2.232 der zweiten Detektoranordnung 2.23.

Voraussetzung für die Bildung von entsprechenden Signalen ist, dass die Erregerleiterbahnen 2.21 ein zeitlich wechselndes elektromagnetisches Erregerfeld im Bereich der Abtastspuren bzw. im Bereich der damit abgetasteten Teilungsspuren 1.21 und 1.22 erzeugen. Im dargestellten Ausführungsbeispiel sind die Erregerleiterbahnen 2.21 als mehrere planar-parallele stromdurchflossene Einzel-Leiterbahnen ausgebildet. Werden die Erregerleiterbahnen 2.21 einer Leiterbahneinheit allesamt in der gleichen Richtung von einem Erregerstrom durchflossen, so bildet sich um die jeweilige Leiterbahneinheit ein schlauch- bzw. zylinderförmig orientiertes elektromagnetisches Feld aus. Die Feldlinien des resultierenden elektromagnetischen Feldes verlaufen in Form konzentrischer Kreise um die Leiterbahneinheiten, wobei die Richtung der Feldlinien in bekannter Art und Weise von der Stromrichtung in den Leiterbahneinheiten abhängt. Die Stromrichtung der unmittelbar an eine gemeinsame Abtastspur angrenzenden Leiterbahneinheiten bzw. die entsprechende Verschaltung dieser Leiterbahneinheiten ist dabei entgegengesetzt zu wählen, so dass die Feldlinien im Bereich der Abtastspuren jeweils identisch orientiert sind.

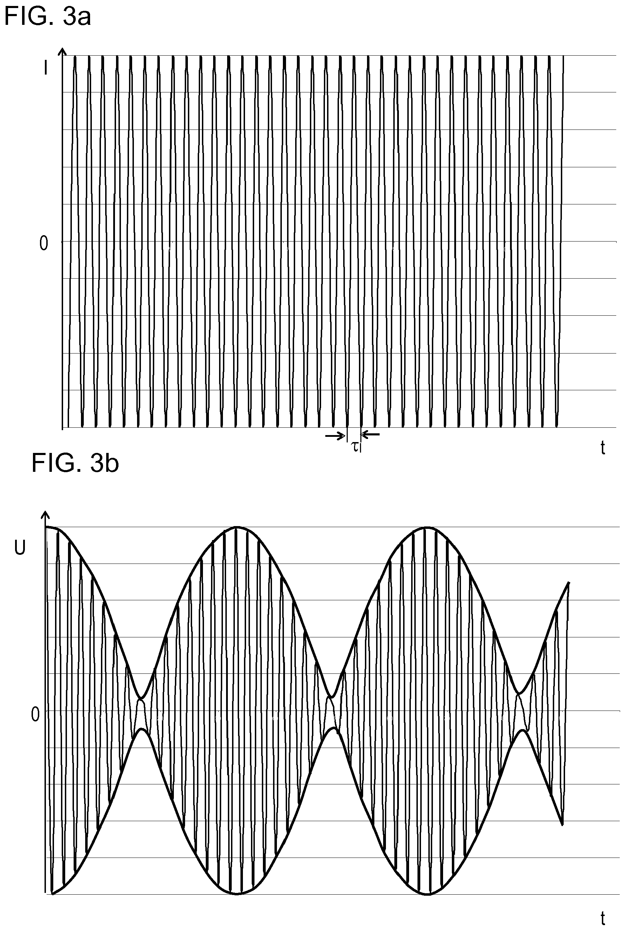

Während des Betriebes des Drehgebers werden die Erregerleiterbahnen 2.21 von einem Wechselstrom durchflossen, der wiederum ein elektromagnetisches Wechselfeld erzeugt. Dieses induziert in den Empfängerleiterbahnen 2.221, 2.222, 2.231, 2.232 eine Wechselspannung, deren Amplitude von der Relativposition der Codescheibe 1.2 zur Leiterplatte 2.2, bzw. zu den Detektoranordnungen 2.22, 2.23 abhängt. Hierzu zeigt Figur 3a einen Signalverlauf des Erregerstroms I in den Erregerleiterbahnen 2.21 mit einer Periodendauer T, während in Figur 3b beispielhaft ein Spannungsverlauf der in den Empfängerleiterbahnen 2.221, 2.222, 2.231, 2.232 induzierten Spannung U bei einer konstanten Umdrehungsgeschwindigkeit der Welle 1.1, bzw. der drehfest damit verbundenen Codescheibe 1.2 dargestellt ist. Wie deutlich zu sehen ist, handelt es sich bei der induzierten Spannung U um ein amplitudenmoduliertes Signal, bei dem die Amplitude der Hüllkurve von der Position der Teilungsspuren 1.21, 1.22 bezogen auf die Empfängerleiterbahnen 2.221, 2.222, 2.231, 2.232 abhängt. Die Anzahl der Signalperioden dieser Hüllkurve pro Umdrehung der Codescheibe 1.2 ist dabei von der Anzahl der Teilungsperioden der abgetasteten Teilungsspur 1.21, 1.22 abhängig.

In der Figur 5 ist ein Blockdiagramm eines ersten Ausführungsbeispiels dargestellt, anhand dessen die Funktionsweise eines erfindungsgemäßen Positionsmessgeräts am Beispiel eines induktiven Drehgebers erläutert werden soll. Wie bereits beschrieben, basiert beispielsweise das Messprinzip eines induktiven Drehgebers darauf, dass in den Erregerleiterbahnen 2.21 ein elektromagnetisches Wechselfeld erzeugt wird. Dies erfolgt im vorliegenden Ausführungsbeispiel durch eine Oszillatoreinheit 2.4, die mit den Erregerleiterbahnen 2.21 einen Schwingkreis bildet. Die erste Teilungsspur 1.21 und die zweiten Teilungsspur 1.22 der Codescheibe 1.2 sind in Figur 5 lediglich angedeutet.

Für dieses Ausführungsbeispiel wird angenommen, dass die erste Teilungsspur 1.21 und die Empfängerleiterbahnen 2.221, 2.231 zu deren Abtastung so ausgeführt sind, dass die Positionssignale, die aus der Abtastung resultieren, eine Periode pro Umdrehung der Welle 1.1 des Drehgebers aufweisen.

Zur Bildung eines ersten absoluten Positionswertes POS1 aus ersten Positionssignalen Z1_1, Z16_1, die aus der Abtastung der Teilungsspuren 1.21, 1.22 mit den Empfängerleiterbahnen 2.221, 2.222 der ersten Detektoreinheit 2.22 resultieren, ist eine erste Positionsverarbeitungseinheit 3.1 vorgesehen. Sie umfasst eine Grobpositionsauswerteeinheit 3.11, eine Feinpositionsauswerteeinheit 3.12 und eine Positionswert-Bildungseinheit 3.13.

Der Grobpositionsauswerteeinheit 3.11 sind die Positionssignale Z1_1 (die induzierten Spannungen mit positionsabhängiger Amplitude) des ersten Positionsdetektors 2.221 zugeführt, die aus der Abtastung der ersten Teilungsspur 1.21 resultieren. Es handelt sich hierbei um zwei um 90° phasenverschobene amplitudenmodulierte Signale, deren Hüllkurven, die den positionsabhängigen Anteil der Positionssignale Z1_1 umfassen, je Umdrehung der Welle 1.1 genau eine Periode aufweisen. Aus den Positionssignalen Z1_1 kann somit auf die Absolutposition der Welle geschlossen werden. Die erste Teilungsspur 1.21 ist in diesem Ausführungsbeispiel somit eine Absolutteilungsspur 1.21. Die Grobpositionsauswerteeinheit 3.11 verarbeitet die Positionssignale Z1_1 zu einem absoluten Grobpositionswert GPOS. Wie durch die Bezeichnung schon ausgedrückt, kann der Grobpositionswert GPOS eine vergleichsweise niedrige Auflösung aufweisen, beispielsweise 32 (2⁵) Schritte. Die Grobpositionsauswerteeinheit 3.11 ist in der Praxis eine sehr umfangreiche elektronische Schaltung. Sie umfasst zur Bildung des Grobpositionswerts GPOS beispielsweise Funktionsblöcke, die Verarbeitungsschritte wie Demodulation, A/D-Wandlung, Signalkorrektur und Interpolation ausführen.

Alternativ zu diesem Beispiel, bei dem der Grobpositionswert GPOS durch Auswertung analoger Positionssignale Z1_1 ermittelt wird, kann die erste Teilungsspur 1.21 als Absolutteilungsspur 1.21 auch parallel (z.B. Gray-Code) oder seriell (Pseudo Random Code, PRC) digital codiert sein (nicht dargestellt).

Der Feinpositionsauswerteeinheit 3.12 sind die Positionssignale Z16_1 des zweiten Positionsdetektors 2.222 der ersten Detektoranordnung 2.22 zugeführt, die aus der Abtastung der zweiten Teilungsspur 1.22 resultieren. Es handelt sich hierbei ebenfalls um zwei um 90° phasenverschobene amplitudenmodulierte Signale. Die Hüllkurven dieser Signale, die den positionsabhängigen Anteil der Positionssignale Z16_1 umfassen, weisen hier allerdings je Umdrehung der Welle 1.1 eine Vielzahl von Perioden (im obigen Beispiel 16) auf. Nachdem die einzelnen Perioden nicht voneinander unterscheidbar sind, kann mit diesen Positionssignalen lediglich eine Relativposition ermittelt werden. Die Feinpositionsauswerteeinheit 3.12 verarbeitet die Positionssignale Z16_1 zu einem Feinpositionswert FPOS. Dies geschieht durch Demodulation der Positionssignale Z16_1 und anschließende Unterteilung der resultierenden Signale in Positionsschritte, bzw. Winkelschritte (Interpolation).

Der Vollständigkeit halber sei erwähnt, dass bei anderen Abtastprinzipien, z.B. optischen oder magnetischen, eine Demodulation der Positionssignale Z16_1 nicht notwendig ist, da hier die Amplitude der Positionssignale direkt positionsabhängig ist.

Der Feinpositionswert FPOS kann eine gegenüber dem Grobpositionswert GPOS höhere Auflösung aufweisen, beispielsweise 16384 (2¹⁴) Positionsschritte, bzw. Winkelschritte je Periode. In anderen Worten umfasst der Wertebereich des Feinpositionswerts FPOS lediglich ein Winkelsegment, dessen Winkelbereich dem einer Periode des Positionssignals des zweiten Positionsdetektors 2.222 entspricht, d.h. die Werte des Feinpositionswerts FPOS wiederholen sich in jeder Teilungsperiode der zweiten Teilungsspur 1.22.

Der Grobpositionswert GPOS und der Feinpositionswert FPOS sind nun der Positionswert-Bildungseinheit 3.13 zugeführt, die aus den beiden Werten den absoluten ersten Positionswert POS1 mit hoher Auflösung erzeugt. Dies geschieht dadurch, dass der niedrig aufgelöste Grobpositionswert GPOS mit dem hoch aufgelösten Feinpositionswert FPOS ergänzt wird, wodurch der Feinpositionswert FPOS einen absoluten Bezug erhält. Dieses Verfahren ist in Fachkreisen unter der Bezeichnung Codeanschluss bekannt. Um einen sicheren Codeanschluss gewährleisten zu können, ist eine Überlappung der Wertebereiche des Grobpositionswertes GPOS und des Feinpositionswertes FPOS um wenigstens 1 Bit notwendig. Im dargestellten Beispiel muss der Grobpositionswert GPOS einen Wertebereich von 4 Bit aufweisen, um die 16 Teilungsperioden der zweiten Teilungsspur 1.22 unterscheiden zu können. Für einen sicheren Codeanschluss sind also 5 Bit notwendig. In der Praxis wird bevorzugt ein größerer Überlappungsbereich gewählt, wodurch sich ein günstiger Wertebereich für den Grobpositionswert von 8 Bit oder mehr ergibt.

Zur Bildung eines zweiten, redundanten Positionswertes POS2 ist nun eine zweite Positionsverarbeitungseinheit 3.2 vorgesehen. Sie umfasst eine Grobpositions-Ermittlungseinheit 3.21, die als Zählereinheit 3.21 ausgeführt ist, eine Feinpositionsauswerteeinheit 3.22 und eine Positionswert-Bildungseinheit 3.23.

Identisch zur ersten Positionsverarbeitungseinheit 3.1 verarbeitet in der zweiten Positionsverarbeitungseinheit 3.2 die Feinpositionsauswerteeinheit 3.22 die Positionssignale Z16_2 des zweiten Positionsdetektors 2.232 der zweiten Detektoranordnung 2.23, die wie die Positionssignale Z16_1 des zweiten Positionsdetektors 2.222 der ersten Detektoranordnung 2.22 ebenfalls aus der Abtastung der ersten Teilungsspur 1.22 resultieren, zu einem Feinpositionswert FPOS. Dieser ist der Zählereinheit 3.21 zugeführt, die dazu ausgebildet ist, Änderungen des Feinpositionswerts FPOS drehrichtungsabhängig zu zählen. Der Zählerstand der Zählereinheit 3.21 stellt somit wiederum einen Grobpositionswert GPOS dar, mit der der Wertebereich des Feinpositionswerts FPOS auf eine Umdrehung der Welle 1.1 erweiterbar ist. Hierzu sind der Grobpositionswert GPOS und der Feinpositionswert FPOS der Positionswert-Bildungseinheit 3.23 zugeführt. Um einen sicheren Codeanschluss in der Positionswert-Bildungseinheit 3.23 zu gewährleisten, ist es auch hier vorteilhaft, wenn sich die Wertebereiche des Feinpositionswerts FPOS und des Grobpositionswerts GPOS überlappen. Mit Vorteil ist die Zählereinheit 3.21 deshalb so ausgestaltet, dass sie je Periode der demodulierten Feinpositionssignale Z16_2 beispielsweise vier Zählschritte ausführt. Hierzu wird der Signalverlauf der demodulierten Feinpositionssignale Z16_2 in vier Bereiche (Quadranten) unterteilt und der Übergang von einem Bereich in den nächsten als Änderungsereignis des Feinpositionswerts FPOS drehrichtungsabhängig gezählt. Man spricht in diesem Fall auch von einem Quadrantenzähler.

Nachdem sowohl der Feinpositionswert FPOS, als auch der Grobpositionswert GPOS aus der Abtastung der zweiten Teilungsspur 1.22, bei der es sich ja um eine Inkrementalteilungsspur 1.22 handelt, resultieren, hat zunächst keiner dieser Werte einen absoluten Bezug. Deshalb ist nun erfindungsgemäß vorgesehen, die Zählereinheit 3.21 mit einem von der ersten Positionsverarbeitungseinheit 3.1 erzeugten absoluten Hilfspositionswert HPOS zu initialisieren. In diesem Ausführungsbeispiel ist der absolute Hilfspositionswert HPOS der Grobpositionswert GPOS der ersten Positionsverarbeitungseinheit 3.1, der neben der Positionswert-Bildungseinheit 3.13 nun auch der Zählereinheit 3.21 zugeführt wird. Für diesen Zweck können Schaltmittel, beispielsweise in Form eines Schaltelements 3.3, vorgesehen sein, über die der Grobpositionswert GPOS zur Zählereinheit 3.21 schaltbar ist. Die Initialisierung wird mit Vorteil während einer Initialisierungsphase unmittelbar nach dem Einschalten der Stromversorgung des Drehgebers vorgenommen.

Die Positionswert-Bildungseinheit 3.23 der zweiten Positionsverarbeitungseinheit 3.2 kann nun aus dem Feinpositionswert FPOS und dem, nach der Initialisierung absoluten, Grobpositionswert GPOS den zweiten absoluten Positionswert POS2 bilden.

Durch den erfindungsgemäßen Aufbau der zweiten Positionsverarbeitungseinheit 3.2 kann somit eine Grobpositionsauswerteeinheit 3.11, die in der ersten Positionsverarbeitungseinheit 3.1 vorgesehen ist und bei der es sich, wie oben bereits erwähnt, um eine sehr komplexe elektronische Schaltung handelt, eingespart und durch die einfach zu realisierende Zählereinheit 3.21 ersetzt werden. Trotzdem stehen im Positionsmessgerät zwei absolute Positionswerte POS1, POS2 zur Verfügung, die weitgehend unabhängig voneinander erzeugt werden. Durch Vergleich der beiden Positionswerte POS1, POS2 kann ein Defekt im Positionsmessgerät mit sehr hoher Wahrscheinlichkeit erkannt werden.

Die Positionswerte POS1, POS2 sind einer Kommunikationseinheit 3.8 zugeführt und mit dieser zu einer Folgeelektronik (beispielsweise einer numerischen Steuerung) übertragbar. Der Vergleich der zwei Positionswerte POS1, POS2 kann entweder bereits in der Kommunikationseinheit 3.8 erfolgen, oder erst in der Folgeelektronik.

Figur 6 zeigt ein Blockdiagramm einer verbesserten Ausführungsform des in Figur 5 dargestellten Positionsmessgeräts. Funktionsblöcke, die in der Beschreibung des Ausführungsbeispiels zu Figur 5 bereits beschrieben wurden, tragen in Figur 6 die gleichen Bezugszeichen.

Im Unterschied zum anhand der Figur 5 beschriebenen Ausführungsbeispiel umfasst die zweite Detektoranordnung 2.23 in Figur 6 zusätzlich Empfängerleiterbahnen 2.231, die einen ersten Positionsdetektor 2.231 bilden, der die erste Teilungsspur 1.21 der Codescheibe 1.2 abtastet. Die Positionssignale Z1_2 des ersten Positionsdetektors 2.231 der zweiten Detektoranordnung 2.23 sind, an Stelle der Positionssignale Z1_1 des ersten Positionsdetektors 2.221 der ersten Detektoranordnung 2.22, der ersten Grobpositionsauswerteeinheit 3.11 der ersten Positionsverarbeitungseinheit 3.1 zuführbar. Hierzu können weitere Schaltmittel vorgesehen sein, beispielsweise ein Schaltelement 3.4, mit dem der erste Positionsdetektor 2.231 der zweiten Detektoranordnung 2.23 in der Initialisierungsphase mit der ersten Grobpositionsauswerteeinheit 3.11 verbindbar ist, sowie ein Schaltelement 3.5, mit dem der erste Positionsdetektor 2.221 der ersten Detektoranordnung 2.22 in der Initialisierungsphase von der ersten Grobpositionsauswerteeinheit 3.11 trennbar ist.

Der besondere Vorteil dieser Ausführungsform ist es, dass in der ersten Positionsverarbeitungseinheit 3.1 zur Bildung jenes Grobpositionswerts GPOS, der der zweiten Positionsverarbeitungseinheit 3.2 für die Initialisierung der Zählereinheit 3.21 und somit zur Herstellung eines absoluten Bezugs für den zweiten Positionswert POS2 als absoluter Hilfspositionswert HPOS zugeführt wird, andere Detektoren verwendet werden, als zur Bildung des Grobpositionswerts GPOS in der ersten Positionsverarbeitungseinheit 3.1 im Normalbetrieb außerhalb der Initialisierungsphase. Dadurch können beispielsweise Defekte der Positionsdetektoren 2.221, 2.231 bereits unmittelbar nach dem Einschalten des Drehgebers aufgedeckt werden.

Diese Ausführungsform ist besonders geeignet für Positionsmessgeräte, die nach dem induktiven Messprinzip arbeiten, da hier der zweite Positionsdetektor 2.231 lediglich mittels Leiterbahnen realisiert wird. Da die Abtastleiterplatte 2.2, auf der die Empfängerleiterbahnen 2.221, 2.222, 2.231, 2.232 angeordnet sind, bereits über eine ausreichende Anzahl von Lagen verfügt, kann der zweite Positionsdetektor 2.231 der zweiten Detektoranordnung 2.23 praktisch ohne zusätzlichen Kosten- und Materialaufwand ergänzt werden.

Figur 7 zeigt ein Blockdiagramm einer weiteren Ausführungsform eines erfindungsgemäßen Positionsmessgeräts. Auch diese Ausführungsform basiert, wie die anhand der Figuren 5 und 6 beschriebenen Varianten, auf dem induktiven Abtastprinzip. Funktionsblöcke, die in den vorhergehenden Ausführungsbeispielen bereits beschrieben wurden, tragen in Figur 7 die gleichen Bezugszeichen. Wie auch die vorhergehend beschriebenen Ausführungsbeispiele ist auch diese Variante nicht auf das induktive Abtastprinzip eingeschränkt, sondern kann von einem Fachmann auf beliebige Abtastprinzipien, insbesondere optische, magnetische oder kapazitive, angewendet werden.

Wie einleitend bereits erwähnt, kann ein absoluter Positionswert auch gewonnen werden, indem mehrere Inkrementalteilungsspuren vorgesehen werden, die unterschiedliche Teilungsperioden zueinander aufweisen. Voraussetzung hierfür ist es, dass die Anzahl der Teilungsperioden so gewählt wird, dass die Phasenwinkel der aus der Abtastung der Inkrementalteilungsspuren resultierenden Abtastsignale innerhalb des Messbereichs (bei Drehgebern eine Umdrehung der Welle 1.1, bei Längenmessgeräten die Länge des Maßstabs) an jeder zu unterscheidenden Position stets eindeutige, sich nicht wiederholende Wertekombinationen ergeben. Geeignete Werte für die Auswahl der Teilungsperioden kann der Fachmann der einschlägigen Fachliteratur entnehmen, Grundlagen hierfür sind beispielsweise in der DE 41 25 865 A1 enthalten.

Im vorliegenden Beispiel sind die erste Teilungsspur 1.21 und die für ihre Abtastung vorgesehenen ersten Positionsdetektoren 2.221, 2.231 der entsprechenden Detektoranordnungen 2.22, 2.23 so ausgelegt, dass die Positionssignale Z3_1, Z3_2 drei Perioden je Umdrehung der Welle 1.1 ergeben. Bei der zweiten Teilungsspur 1.21 und den zugehörigen zweiten Detektoranordnungen 2.222, 2.232 wurden die in den vorherigen Ausführungsbeispielen verwendeten 16 Perioden je Umdrehung beibehalten. Da keine der beiden Teilungspuren 1.21, 1.22 einen absoluten Bezug aufweist und aus ihrer Abtastung Positionssignale mit mehreren Signalperioden je Umdrehung der Welle 1.1 resultieren, können die Teilungsspuren 1.21, 1.22 als Inkrementalteilungsspuren 1.21, 1.22 betrachtet werden.

Der ersten Positionsverarbeitungseinheit 4.1 in diesem Ausführungsbeispiel sind somit vom ersten Positionsdetektor 2.221 der ersten Detektoreinheit 2.22 erste Positionssignale Z3_1 und vom zweiten Positionsdetektor 2.222 der ersten Detektoreinheit 2.22 zweite Positionssignale Z16_1 zugeführt, die diese zum ersten absoluten Positionswert POS1 verarbeitet. Hierzu umfasst die erste Positionsverarbeitungseinheit 4.1 eine erste Auswerteeinheit 4.11, eine zweite Auswerteeinheit 4.12, sowie eine Positionswert-Bildungseinheit 4.13.

Die Auswerteeinheiten 4.11, 4.12 sind dazu ausgebildet, aus den ihnen zugeführten Positionssignalen Z3_1, Z3_16 Phasenwinkel Φ1, Φ2 zu ermitteln. Durch die gewählte Dimensionierung der Teilungsspuren 1.21, 1.22 ergibt sich je Umdrehung der Welle 1.1 für den ersten Phasenwinkel Φ1 ein Wertebereich von 3 * 360° und für den zweiten Phasenwinkel Φ2 ein Wertebereich von 16 * 360°. Innerhalb einer Umdrehung der Welle 1.1 ergeben die Phasenwinkel Φ1, Φ2 stets eindeutige Wertepaare, so dass jedem Wertepaar ein absoluter Positionswert zugeordnet werden kann. Diese Zuordnung erfolgt, beispielsweise durch Berechnung oder mit Hilfe einer Tabelle in der Positionswert-Bildungseinheit 4.13, der die beiden Phasenwinkel Φ1, Φ2 zugeführt sind.

Die zweite Positionsverarbeitungseinheit 4.2 entspricht insofern der in den vorherigen Ausführungsbeispielen beschriebenen, als dass zur Bildung des zweiten Positionswerts POS2 auch hier lediglich die Positionssignale Z16_2, die aus der Abtastung der zweiten Teilungsspur 1.22 resultieren, herangezogen werden und der absolute Bezug durch Initialisierung der Grobpositions-Ermittlungseinheit 4.21 mit dem Hilfspositionswert HPOS hergestellt wird. Abweichend zu den vorhergehenden Ausführungsbeispielen ist die Grobpositions-Ermittlungseinheit 4.21 hier jedoch keine Zählereinheit, sondern eine Speichereinheit 4.21, der der absolute Hilfspositionswert HPOS und der zweite absolute Positionswert POS2 zugeführt sind. Sowohl der Hilfspositionswert HPOS, als auch der zweite absolute Positionswert POS2 sind in der Speichereinheit 4.21 speicherbar und der aktuell gespeicherte Wert als Grobpositionswert GPOS an die Positionswert-Bildungseinheit 4.23 ausgebbar.

Als absoluter Hilfspositionswert HPOS wird der zweiten Positionsverarbeitungseinheit 4.2 in diesem Ausführungsbeispiel der erste absolute Positionswert POS1 zugeführt, der in der ersten Positionsverarbeitungseinheit 4.1 generiert wird. Hierzu können Schaltmittel in Form eines Schaltelements 3.6 vorgesehen sein.

Zur Herstellung eines absoluten Bezugs wird in der Initialisierungsphase der erste absolute Positionswert POS1 in der Speichereinheit 4.21 der zweiten Positionsverarbeitungseinheit 4.2 gespeichert und als Grobpositionswert GPOS an die Positionswert-Bildungseinheit 4.23 ausgegeben. Diese bildet aus dem Grobpositionswert GPOS und dem von der Feinpositionsauswerteeinheit 3.22 generierten Feinpositionswert FPOS den zweiten absoluten Positionswert POS2. Nachdem der zweite absolute Positionswert POS2 zur Verfügung steht, wird dieser in Zeitabständen, die von einem Arbeitstaktsignal CLK vorgegeben werden, in die Speichereinheit 4.21 eingespeichert und wiederum als Grobpositionswert GPOS an die Positionswert-Bildungseinheit 4.23 ausgegeben. Die Frequenz des Arbeitstaktsignals CLK ist so gewählt, dass auch bei einer maximalen Änderungsgeschwindigkeit des Feinpositionswerts FPOS, der Übergang von einer Teilungsperiode der Inkrementalteilungsspur zur nächsten sicher erkannt werden kann.

Auch in diesem Ausführungsbeispiel müssen sich die Wertebereiche des Grobpositionswerts GPOS und des Feinpositionswerts FPOS um wenigstens 1 Bit überlappen, um den zweiten absoluten Positionswert POS2 bilden zu können. Das bedeutet im dargestellten Beispiel, dass der Grobpositionswert GPOS eine Bitbreite von 5 Bit oder mehr aufweisen muss, da bereits 4 Bit benötigt werden, um die aktuelle Signalperiode der Inkrementalteilungsspur identifizieren zu können. In der Praxis wird jedoch ein größerer Überlappungsbereich angestrebt, bis hin zum vollen Wertebereich des zweiten absoluten Positionswerts POS2. Der gewählte Überlappungsbereich bestimmt auch die erforderliche Bitbreite der Speichereinheit 4.21, sowie die Anzahl der höherwertigen Bits, die vom ersten absoluten Positionswert POS1 und vom zweiten absoluten Positionswert POS2 zur Speichereinheit 4.21 geführt werden.

Zur Optimierung der Auflösung des Positionsmessgeräts ist es vorteilhaft, in der zweiten Positionsverarbeitungseinheit 4.2 zur Bildung des Feinpositionswerts FPOS diejenigen Positionssignale heranzuziehen, die aus der Abtastung der Inkrementalteilungsspur mit der größten Anzahl von Teilungsperioden resultieren. Im dargestellten Beispiel sind das die Positionssignale Z2_16, die aus der Abtastung der zweiten Teilungsspur 1.22 resultieren.

Der erste Positionsdetektor 2.231 der zweiten Detektoranordnung 2.23 ist auch in diesem Ausführungsbeispiel als optional zu betrachten, um die Sicherheit der Generierung des zweiten absoluten Positionswerts POS2 noch weiter zu erhöhen. Auch hier kann jedoch bereits ein sehr sicherer zweiter Positionswert POS2 generiert werden, wenn der erste absolute Positionswert POS1, der als Hilfspositionswert HPOS der Speichereinheit 4.21 zugeführt wird, unter Verwendung der Positionssignale Z3_1 des ersten Positionsdetektors 2.221 der ersten Detektoranordnung 2.22 gebildet wird.

Die vorliegende Erfindung ist geeignet für Positionsmessgeräte mit einem Codeträger, auf dem wenigstens zwei Teilungsspuren 1.21, 1.22 angeordnet sind, durch deren Abtastung absolute Positionswerte POS1, POS2 gebildet werden können. Vorteilhafte Kombinationen sind:
Eine Absolutteilungsspur 1.21 und eine Inkrementalteilungsspur 1.22, entsprechend der anhand der Figuren 5 und 6 beschriebenen Ausführungsbeispiele. Die Absolutteilungsspur 1.21 kann analog, digital parallel oder digital seriell codiert sein.

Zwei Inkrementalteilungsspuren 1.21, 1.22, die unterschiedliche Teilungsperioden aufweisen und bei denen die Phasenwinkel, die aus den Positionssignalen ermittelt werden können, innerhalb des Messbereichs an jeder Position eindeutige Wertepaare ergeben, entsprechend dem anhand der Figur 7 beschriebenen Ausführungsbeispiel.

## Patentansprüche

1. Positionsmessgerät mit
• einem Codeträger (1.2) mit wenigstens einer ersten Teilungsspur (1.21) und einer zweiten Teilungsspur (1.22), wobei die zweite Teilungsspur (1.22) eine Inkrementalteilungsspur ist,
• einer ersten Detektoranordnung (2.22) zur Erzeugung von ersten Positionssignalen (Z1_1, Z3_1, Z16_1) durch Abtastung der ersten Teilungsspur (1.21) und der zweiten Teilungsspur (1.22) in einer Messrichtung,
• einer zweiten Detektoranordnung (2.23) zur Erzeugung von zweiten Positionssignalen (Z16_2) durch Abtastung der zweiten Teilungsspur (1.22) in einer Messrichtung,
• einer ersten Positionsverarbeitungseinheit (3.1, 4.1) zur Verarbeitung der ersten Positionssignale (Z1_1, Z3_1, Z16_1) zu einem ersten absoluten Positionswert (POS1) und
• einer zweiten Positionsverarbeitungseinheit (3.2, 4.2) zur Verarbeitung der zweiten Positionssignale (Z16_2) zu einem zweiten absoluten Positionswert (POS2),
wobei die zweite Positionsverarbeitungseinheit (3.2, 4.2) mit einem absoluten Hilfspositionswert (HPOS) initialisierbar ist, der der zweiten Positionsverarbeitungseinheit (3.2, 4.2) von der ersten Positionsverarbeitungseinheit (3.1, 4.1) zugeführt ist.

2. Positionsmessgerät gemäß dem Anspruch 1, wobei die zweite Positionsverarbeitungseinheit (3.2, 4.2)
• eine Feinpositionsauswerteeinheit (3.22) zur Verarbeitung der zweiten Positionssignale (Z16_2) zu einem Feinpositionswert (FPOS),
• eine Zählereinheit (3.21), der der Feinpositionswert (FPOS) zugeführt ist und mit der durch Zählung von Änderungen des Feinpositionswerts (FPOS) ein Grobpositionswert (GPOS) erzeugbar ist und
• eine Positionswert-Bildungseinheit (3.23), mit dem der Grobpositionswert (GPOS) und der Feinpositionswert (FPOS) zum zweiten absoluten Positionswert (POS2) verarbeitbar sind,
umfasst und die Zählereinheit (3.21) mit dem absoluten Hilfspositionswert (HPOS) initialisierbar ist.

3. Positionsmessgerät gemäß dem Anspruch 1, wobei die zweite Positionsverarbeitungseinheit (3.2, 4.2)
• eine Feinpositionsauswerteeinheit (3.22) zur Verarbeitung der zweiten Positionssignale (Z16_2) zu einem Feinpositionswert (FPOS),
• eine Speichereinheit (4.21), der der zweite absolute Positionswert (POS2) zugeführt ist und in der der zweite absolute Positionswert (POS2) als Grobpositionswert (GPOS) speicherbar ist und
• eine Positionswert-Bildungseinheit (4.23), mit dem der Grobpositionswert (GPOS) und der Feinpositionswert (FPOS) zum zweiten absoluten Positionswert (POS2) verarbeitbar sind,
umfasst und der absolute Hilfspositionswert (HPOS) in der Speichereinheit (4.21) als Grobpositionswert (GPOS) speicherbar ist.

4. Positionsmessgerät gemäß einem der Ansprüche 1 bis 3, wobei die erste Teilungsspur (1.21) eine Absolutteilungsspur ist und die erste Positionsverarbeitungseinheit (3.1) eine Grobpositionsauswerteeinheit (3.11) umfasst, die aus den Positionssignalen (Z1_1), die aus der Abtastung der ersten Teilungsspur (1.21) resultieren, einen absoluten Grobpositionswert (GPOS) generiert, der der zweiten Positionsverarbeitungseinheit (3.2, 4.2) als Hilfspositionswert (HPOS) zugeführt ist.

5. Positionsmessgerät gemäß einem der Ansprüche 1 bis 3, wobei die erste Teilungsspur (1.21) eine erste Inkrementalteilungsspur und die zweite Teilungsspur (1.22) eine zweite Inkrementalteilungsspur ist, die Teilungsspuren (1.21, 1.22) eine unterschiedliche Anzahl von Teilungsperioden aufweisen und die erste Positionsverarbeitungseinheit (4.1) aus den Positionssignalen (Z3_1, Z16_1), die aus der Abtastung der ersten Teilungsspur (1.21) und der zweiten Teilungsspur (1.22) resultieren, den ersten absoluten Positionswert (POS1) generiert, von dem zumindest eine Anzahl höherwertiger Bits der zweiten Positionsverarbeitungseinheit (3.2, 4.2) als Hilfspositionswert (HPOS) zugeführt sind.

6. Positionsmessgerät nach einem der vorhergehenden Ansprüche, wobei Schaltmittel (3.3, 3.6) vorgesehen sind, mit denen der zweiten Positionsverarbeitungseinheit (3.2, 4.2) der Hilfspositionswert (HPOS) zuführbar ist.

7. Positionsmessgerät nach einem der vorhergehenden Ansprüche, wobei die zweite Detektoranordnung (2.23) einen ersten Positionsdetektor (2.231) zur Abtastung der ersten Teilungsspur (1.21) und einen zweiten Positionsdetektor (2.232) zur Abtastung der zweiten Teilungsspur (1.22) umfasst und Schaltmittel (3.4, 3.5) vorgesehen sind, mit denen Positionssignale (Z1_2, Z3_2), die aus der Abtastung der ersten Teilungsspur (1.21) resultieren, zur Bildung des Hilfspositionswerts (HPOS) der ersten Positionsverarbeitungseinheit (3.1, 4.1) zuführbar sind.

8. Positionsmessgerät nach einem der vorhergehenden Ansprüche, wobei der erste absolute Positionswert (POS1) und der zweite absolute Positionswert (POS2) einer Kommunikationseinheit (3.8) zugeführt und von dieser zu einer Folgeelektronik ausgebbar sind.

9. Verfahren zum Betreiben eines Positionsmessgeräts mit
• einem Codeträger (1.2) mit wenigstens einer ersten Teilungsspur (1.21) und einer zweiten Teilungsspur (1.22), wobei die zweite Teilungsspur (1.22) eine Inkrementalteilungsspur ist,
• einer ersten Detektoranordnung (2.22) zur Erzeugung von ersten Positionssignalen (Z1_1, Z3_1, Z16_1) durch Abtastung der ersten Teilungsspur (1.21) und der zweiten Teilungsspur (1.22) in einer Messrichtung,
• einer zweiten Detektoranordnung (2.23) zur Erzeugung von zweiten Positionssignalen (Z16_2) durch Abtastung der zweiten Teilungsspur (1.22) in einer Messrichtung,
• einer ersten Positionsverarbeitungseinheit (3.1, 4.1) zur Verarbeitung der ersten Positionssignale (Z1_1, Z3_1, Z16_1) zu einem ersten absoluten Positionswert (POS1) und
• einer zweiten Positionsverarbeitungseinheit (3.2, 4.2) zur Verarbeitung der zweiten Positionssignale (Z16_2) zu einem zweiten absoluten Positionswert (POS2),
wobei die zweite Positionsverarbeitungseinheit (3.2, 4.2) in einer Initialisierungsphase mit einem absoluten Hilfspositionswert (HPOS) initialisiert wird, der der zweiten Positionsverarbeitungseinheit (3.2, 4.2) von der ersten Positionsverarbeitungseinheit (3.1, 4.1) zugeführt wird.

10. Verfahren gemäß dem Anspruch 9, wobei die zweite Positionsverarbeitungseinheit (3.2, 4.2)
• eine Feinpositionsauswerteeinheit (3.22) zur Verarbeitung der zweiten Positionssignale (Z16_2) zu einem Feinpositionswert (FPOS),
• eine Zählereinheit (3.21), der der Feinpositionswert (FPOS) zugeführt ist und mit der durch Zählung von Änderungen des Feinpositionswert (FPOS) ein Grobpositionswert (GPOS) erzeugbar ist und
• eine Positionswert-Bildungseinheit (3.23), mit dem der Grobpositionswert (GPOS) und der Feinpositionswert (FPOS) zum zweiten absoluten Positionswert (POS2) verarbeitbar sind,
umfasst und die Zählereinheit (3.21) in der Initialisierungsphase mit dem absoluten Hilfspositionswert (HPOS) initialisiert wird.

11. Verfahren gemäß dem Anspruch 9, wobei die zweite Positionsverarbeitungseinheit (3.2, 4.2)
• eine Feinpositionsauswerteeinheit (3.22) zur Verarbeitung der zweiten Positionssignale (Z16_2) zu einem Feinpositionswert (FPOS),
• eine Speichereinheit (4.21), der der zweite absolute Positionswert (POS2) zugeführt ist und in der der zweite absolute Positionswert (POS2) als Grobpositionswert (GPOS) speicherbar ist und
• eine Positionswert-Bildungseinheit (4.23), mit dem der Grobpositionswert (GPOS) und der Feinpositionswert (FPOS) zum zweiten absoluten Positionswert (POS2) verarbeitbar sind,
umfasst und der absolute Hilfspositionswert (HPOS) in der Initialisierungsphase in der Speichereinheit (4.21) als Grobpositionswert (GPOS) gespeichert wird.

12. Verfahren nach einem der Ansprüche 9 bis 11, wobei die erste Teilungsspur (1.21) eine Absolutteilungsspur ist und die erste Positionsverarbeitungseinheit (3.1) eine Grobpositionsauswerteeinheit (3.11) umfasst, die aus den Positionssignalen (Z1_1), die aus der Abtastung der ersten Teilungsspur (1.21) resultieren, einen absoluten Grobpositionswert (GPOS) generiert, der der zweiten Positionsverarbeitungseinheit (3.2, 4.2) als Hilfspositionswert (HPOS) zugeführt wird.

13. Verfahren nach einem der Ansprüche 9 bis 11, wobei die erste Teilungsspur (1.21) eine erste Inkrementalteilungsspur und die zweite Teilungsspur (1.22) eine zweite Inkrementalteilungsspur ist, die Teilungsspuren (1.21, 1.22) eine unterschiedliche Anzahl von Teilungsperioden aufweisen und die erste Positionsverarbeitungseinheit (4.1) aus den Positionssignalen (Z3_1, Z16_1), die aus der Abtastung der ersten Teilungsspur (1.21) und der zweiten Teilungsspur (1.22) resultieren, den ersten absoluten Positionswert (POS1) generiert, von dem zumindest eine Anzahl höherwertiger Bits der zweiten Positionsverarbeitungseinheit (3.2, 4.2) als Hilfspositionswert (HPOS) zugeführt werden.

14. Verfahren nach einem der Ansprüche 9 bis 13, wobei Schaltmittel (3.3, 3.6) vorgesehen sind, mit denen der zweiten Positionsverarbeitungseinheit (3.2, 4.2) der Hilfspositionswert (HPOS) zugeführt wird.

15. Verfahren nach einem der Ansprüche 9 bis 14, wobei die zweite Detektoranordnung (2.23) einen ersten Positionsdetektor (2.231) zur Abtastung der ersten Teilungsspur (1.21) und einen zweiten Positionsdetektor (2.232) zur Abtastung der zweiten Teilungsspur (1.22) umfasst und Schaltmittel (3.4, 3.5) vorgesehen sind, mit denen Positionssignale (Z1_2, Z3_2), die aus der Abtastung der ersten Teilungsspur (1.21) resultieren, zur Bildung des Hilfspositionswerts (HPOS) der ersten Positionsverarbeitungseinheit (3.1, 4.1) zugeführt werden.

16. Verfahren nach einem der Ansprüche 9 bis 15, wobei der erste absolute Positionswert (POS1) und der zweite absolute Positionswert (POS2) einer Kommunikationseinheit (3.8) zugeführt werden und von dieser zu einer Folgeelektronik ausgebbar sind.

17. Verfahren nach einem der Ansprüche 9 bis 16, wobei die Initialisierung der zweiten Positionsverarbeitungseinheit (3.2, 4.2) unmittelbar nach dem Einschalten des Positionsmessgeräts erfolgt.

## Claims

1. Position measuring device, having
• a code carrier (1.2) having at least one first graduation track (1.21) and one second graduation track (1.22), wherein the second graduation track (1.22) is an incremental graduation track,
• a first detector arrangement (2.22) for producing first position signals (Z1_1, Z3_1, Z16_1) by scanning the first graduation track (1.21) and the second graduation track (1.22) in a measurement direction,
• a second detector arrangement (2.23) for producing second position signals (Z16_2) by scanning the second graduation track (1.22) in a measurement direction,
• a first position processing unit (3.1, 4.1) for processing the first position signals (21_1, Z3_1, Z16_1) to form a first absolute position value (POS1) and
• a second position processing unit (3.2, 4.2) for processing the second position signals (Z16_2) to form a second absolute position value (POS2),
wherein the second position processing unit (3.2, 4.2) is initializable with an absolute auxiliary position value (HPOS) that is supplied to the second position processing unit (3.2, 4.2) from the first position processing unit (3.1, 4.1).

2. Position measuring device according to Claim 1, wherein the second position processing unit (3.2, 4.2) comprises
• a fine position evaluation unit (3.22) for processing the second position signals (Z16_2) to form a fine position value (FPOS),
• a counter unit (3.21), which is supplied with the fine position value (FPOS) and which can be used to produce an approximate position value (GPOS) by counting changes in the fine position value (FPOS),
• a position value forming unit (3.23), by means of which the approximate position value (GPOS) and the fine position value (FPOS) can be processed to form the second absolute position value (POS2),
and the counter unit (3.21) is initializable with the absolute auxiliary position value (HPOS).

3. Position measuring device according to Claim 1, wherein the second position processing unit (3.2, 4.2) comprises
• a fine position evaluation unit (3.22) for processing the second position signals (Z16_2) to form a fine position value (FPOS),
• a memory unit (4.21), which is supplied with the second absolute position value (POS2) and in which the second absolute position value (POS2) is storable as approximate position value (GPOS), and
• a position value forming unit (4.23), by means of which the approximate position value (GPOS) and the fine position value (FPOS) can be processed to form the second absolute position value (POS2),
and the absolute auxiliary position value (HPOS) is storable in the memory unit (4.21) as approximate position value (GPOS).

4. Position measuring device according to any one of Claims 1 to 3, wherein the first graduation track (1.21) is an absolute graduation track and the first position processing unit (3.1) comprises an approximate position evaluation unit (3.11), which generates an absolute approximate position value (GPOS) from the position signals (Z1_1) which result from the scanning of the first graduation track (1.21), said absolute approximate position value being supplied to the second position processing unit (3.2, 4.2) as auxiliary position value (HPOS).

5. Position measuring device according to any one of Claims 1 to 3, wherein the first graduation track (1.21) is a first incremental graduation track and the second graduation track (1.22) is a second incremental graduation track, the graduation tracks (1.21, 1.22) have a different number of graduation periods and the first position processing unit (4.1) generates the first absolute position value (POS1) from the position signals (Z3_1, Z16_1) which result from the scanning of the first graduation track (1.21) and the second graduation track (1.22), at least a number of higher value bits of said first absolute position value being supplied to the second position processing unit (3.2, 4.2) as auxiliary position value (HPOS).

6. Position measuring device according to any one of the preceding claims, wherein switching means (3.3, 3.6) are provided, by means of which the auxiliary position value (HPOS) is suppliable to the second position processing unit (3.2, 4.2).

7. Position measuring device according to any one of the preceding claims, wherein the second detector arrangement (2.23) comprises a first position detector (2.231) for scanning the first graduation track (1.21) and a second position detector (2.232) for scanning the second graduation track (1.22) and provision is made of switching means (3.4, 3.5), by means of which position signals (Z1_2, Z3_2) which result from the scanning of the first graduation track (1.21) are suppliable to the first position processing unit (3.1, 4.1) for the purpose of forming the auxiliary position value (HPOS).

8. Position measuring device according to any one of the preceding claims, wherein the first absolute position value (POS1) and the second absolute position value (POS2) are supplied to a communications unit (3.8) and are able to be output by said communications unit to subsequent electronics.

9. Method for operating a position measuring device having
• a code carrier (1.2) having at least one first graduation track (1.21) and one second graduation track (1.22), wherein the second graduation track (1.22) is an incremental graduation track,
• a first detector arrangement (2.22) for producing first position signals (Z1_1, Z3_1, Z16_1) by scanning the first graduation track (1.21) and the second graduation track (1.22) in a measurement direction,
• a second detector arrangement (2.23) for producing second position signals (Z16_2) by scanning the second graduation track (1.22) in a measurement direction,
• a first position processing unit (3.1, 4.1) for processing the first position signals (Z1_1, Z3_1, Z16_1) to form a first absolute position value (POS1) and
• a second position processing unit (3.2, 4.2) for processing the second position signals (Z16_2) to form a second absolute position value (POS2),
wherein, in an initialization phase, the second position processing unit (3.2, 4.2) is initialized with an absolute auxiliary position value (HPOS) that is supplied to the second position processing unit (3.2, 4.2) from the first position processing unit (3.1, 4.1).

10. Method according to Claim 9, wherein the second position processing unit (3.2, 4.2) comprises
• a fine position evaluation unit (3.22) for processing the second position signals (Z16_2) to form a fine position value (FPOS),
• a counter unit (3.21), which is supplied with the fine position value (FPOS) and which can be used to produce an approximate position value (GPOS) by counting changes in the fine position value (FPOS),
• a position value forming unit (3.23), by means of which the approximate position value (GPOS) and the fine position value (FPOS) can be processed to form the second absolute position value (POS2),
and, in the initialization phase, the counter unit (3.21), is initialized with the absolute auxiliary position value (HPOS).

11. Method according to Claim 9, wherein the second position processing unit (3.2, 4.2) comprises
• a fine position evaluation unit (3.22) for processing the second position signals (216_2) to form a fine position value (FPOS),
• a memory unit (4.21), which is supplied with the second absolute position value (POS2) and in which the second absolute position value (POS2) is storable as approximate position value (GPOS), and
• a position value forming unit (4.23), by means of which the approximate position value (GPOS) and the fine position value (FPOS) can be processed to form the second absolute position value (POS2),
and, in the initialization phase, the absolute auxiliary position value (HPOS) is stored in the memory unit (4.21) as approximate position value (GPOS).

12. Method according to any one of Claims 9 to 11, wherein the first graduation track (1.21) is an absolute graduation track and the first position processing unit (3.1) comprises an approximate position evaluation unit (3.11), which generates an absolute approximate position value (GPOS) from the position signals (Z1_1) which result from the scanning of the first graduation track (1.21), said absolute approximate position value being supplied to the second position processing unit (3.2, 4.2) as auxiliary position value (HPOS).

13. Method according to any one of Claims 9 to 11, wherein the first graduation track (1.21) is a first incremental graduation track and the second graduation track (1.22) is a second incremental graduation track, the graduation tracks (1.21, 1.22) have a different number of graduation periods and the first position processing unit (4.1) generates the first absolute position value (POS1) from the position signals (Z3_1, Z16_1) which result from the scanning of the first graduation track (1.21) and the second graduation track (1.22), at least a number of higher value bits of said first absolute position value being supplied to the second position processing unit (3.2, 4.2) as auxiliary position value (HPOS).

14. Method according to any one of Claims 9 to 13, wherein switching means (3.3, 3.6) are provided, by means of which the auxiliary position value (HPOS) is supplied to the second position processing unit (3.2, 4.2).

15. Method according to any one of Claims 9 to 14, wherein the second detector arrangement (2.23) comprises a first position detector (2.231) for scanning the first graduation track (1.21) and a second position detector (2.232) for scanning the second graduation track (1.22) and provision is made of switching means (3.4, 3.5), by means of which position signals (Z1_2, Z3_2) which result from the scanning of the first graduation track (1.21) are supplied to the first position processing unit (3.1, 4.1) for the purpose of forming the auxiliary position value (HPOS).

16. Method according to any one of Claims 9 to 15, wherein the first absolute position value (POS1) and the second absolute position value (POS2) are supplied to a communications unit (3.8) and are able to be output by said communications unit to subsequent electronics.

17. Method according to any one of Claims 9 to 16, wherein the initialization of the second position processing unit (3.2, 4.2) is implemented immediately after activation of the position measuring device.

## Revendications

1. Appareil de mesure de position comportant
• un support de code (1.2) comportant au moins une première piste de graduation (1.21) et une seconde piste de graduation (1.22), dans lequel la seconde piste de graduation (1.22) est une piste de graduation incrémentale,
• un premier système détecteur (2.22) destiné à générer des premiers signaux de position (Z1_1, Z3_1, Z16_1) par balayage de la première piste de graduation (1.21) et de la seconde piste de graduation (1.22) dans une direction de mesure,
• un second système détecteur (2.23) destiné à générer des seconds signaux de position (Z16_2) par balayage de la seconde piste de graduation (1.22) dans une direction de mesure,
• une première unité de traitement de position (3.1, 4.1) destinée à traiter les premiers signaux de position (Z1_1, Z3_1, Z16_1) pour obtenir une première valeur absolue de position (POS1), et
• une seconde unité de traitement de position (3.2, 4.2) destinée à traiter les seconds signaux de position (Z16_2) pour obtenir une seconde valeur de position absolue (POS2),
dans lequel la seconde unité de traitement de position (3.2, 4.2) peut être initialisée avec une valeur de position auxiliaire absolue (HPOS) qui est fournie à la seconde unité de traitement de position (3.2, 4.2) par la première unité de traitement de position (3.1, 4.1).

2. Appareil de mesure de position selon la revendication 1, dans lequel la seconde unité de traitement de position (3.2, 4.2) comprend
• une unité d'évaluation de position fine (3.22) destinée à traiter les seconds signaux de position (Z16_2) pour obtenir une valeur de position fine (FPOS),
• une unité de comptage (3.21), à laquelle est fournie la valeur de position fine (FPOS) et au moyen de laquelle une valeur de position grossière (GPOS) peut être générée par comptage des variations de la valeur de position fine (FPOS), et
• une unité de calcul de valeur de position (3.23) au moyen de laquelle la valeur de position grossière (GPOS) et la valeur de position fine (FPOS) peuvent être traitées pour obtenir la seconde valeur de position absolue (POS2),
et l'unité de comptage (3.21), peut être initialisée avec la valeur de position auxiliaire absolue (HPOS).

3. Appareil de mesure de position selon la revendication 1, dans lequel la seconde unité de traitement de position (3.2, 4.2) comprend
• une unité d'évaluation de position fine (3.22) destinée à traiter les seconds signaux de position (Z16_2) pour obtenir une valeur de position fine (FPOS),
• une unité à mémoire (4.21) à laquelle est fournie la seconde valeur absolue de position (POS2) et dans laquelle la seconde valeur absolue de position (POS2) peut être mémorisée en tant que valeur de position grossière (GPOS), et
• une unité de calcul de valeur de position (4.23) au moyen de laquelle la valeur de position grossière (GPOS) et la valeur de position fine (FPOS) peuvent être traitées pour obtenir la seconde valeur de position absolue (POS2),
et la valeur de position auxiliaire absolue (HPOS) peut être stockée dans l'unité à mémoire (4.21) en tant que valeur de position grossière (GPOS).

4. Appareil de mesure de position selon l'une des revendications 1 à 3, dans lequel la première piste de graduation (1.21) est une piste de graduation absolue et la première unité de traitement de position (3.1) est une unité d'évaluation de position grossière (3.11) qui génère une valeur absolue de position grossière (GPOS) à partir des signaux de position (Z1_1) résultant du balayage de la première piste de graduation (1.21), qui est fournie à la seconde unité de traitement de position (3.2, 4.2) en tant que valeur de position auxiliaire (HPOS).

5. Appareil de mesure de position selon l'une des revendications 1 à 3, dans lequel la première piste de graduation (1.21) est une première piste de graduation incrémentale et la seconde piste de graduation (1.22) est une seconde piste de graduation incrémentale, les pistes de graduation (1.21, 1.22) présentent un nombre différent de périodes de graduation et la première unité de traitement de position (4.1) génère la première valeur absolue de position (POS1) à partir des signaux de position (Z3_1, Z16_1) qui résultent du balayage de la première piste de graduation (1.21) et de la seconde piste de graduation (1.22), dont au moins un certain nombre de bits de poids fort sont fournis à la seconde unité de traitement de position (3.2, 4.2) en tant que valeur de position auxiliaire (HPOS).

6. Appareil de mesure de position selon l'une des revendications précédentes, dans lequel il est prévu des moyens de commutation (3.3, 3.6) au moyen desquels la valeur de position auxiliaire (HPOS) peut être fournie à la seconde unité de traitement de position (3.2, 4.2).

7. Appareil de mesure de position selon l'une des revendications précédentes, dans lequel le second système détecteur (2.23) comprend un premier détecteur de position (2.231) destiné à balayer la première piste de graduation (1.21) et un second détecteur de position (2.232) destiné à balayer la seconde piste de graduation (1.22), et il est prévu des moyens de commutation (3.4, 3.5) au moyen desquels des signaux de position (Z1_2, Z3_2) résultant du balayage de la première piste de graduation (1.21) peuvent être fournis à la première unité de traitement de position (3.1, 4.1) pour le calcul de la valeur de position auxiliaire (HPOS).

8. Appareil de mesure de position selon l'une des revendications précédentes, dans lequel la première valeur absolue de position (POS1) et la seconde valeur absolue de position (POS2) sont fournies à une unité de communication (3.8) et peuvent être fournies en sortie de celle-ci à une électronique suivante.

9. Procédé de fonctionnement d'un appareil de mesure de position, comportant
• un support de code (1.2) comportant au moins une première piste de graduation (1.21) et une seconde piste de graduation (1.22), dans lequel la seconde piste de graduation (1.22) est une piste de graduation incrémentale,
• un premier système détecteur (2.22) destiné à générer des premiers signaux de position (Z1_1, Z3_1 Z16_1) par balayage de la première piste de graduation (1.21) et de la seconde piste de graduation (1.22) dans une direction de mesure,
• un second système détecteur (2.23) destiné à générer des seconds signaux de position (Z16_2) par balayage de la seconde piste de graduation (1.22) dans une direction de mesure,
• une première unité de traitement de position (3.1, 4.1) destinée à traiter les premiers signaux de position (Z1_1, S3_1, Z16_1) pour obtenir une première valeur absolue de position (POS1), et
• une seconde unité de traitement de position (3.2, 4.2) destinée à traiter les seconds signaux de position (Z16_2) pour obtenir une seconde valeur de position absolue (POS2),
dans lequel la seconde unité de traitement de position (3.2, 4.2) est initialisée au cours d'une phase d'initialisation avec une valeur de position auxiliaire absolue (HPOS) qui est fournie à la seconde unité de traitement de position (3.2, 4.2) par la première unité de traitement de position (3.1, 4.1).

10. Procédé selon la revendication 9, dans lequel la seconde unité de traitement de position (3.2, 4.2) comprend
• une unité d'évaluation de position fine (3.22) destinée à traiter les seconds signaux de position (Z16_2) pour obtenir une valeur de position fine (FPOS)*,*
• une unité de comptage (3.21), à laquelle est fournie la valeur de position fine (FPOS) et au moyen de laquelle une valeur de position grossière (GPOS) peut être générée par comptage des variations de la valeur de position fine (FPOS), et
• une unité de calcul de valeur de position (3.23), au moyen de laquelle la valeur de position grossière (GPOS) et la valeur de position fine (FPOS) peuvent être traitées pour obtenir la seconde valeur de position absolue (POS2),
et l'unité de comptage (3.21), est initialisée avec la valeur de position auxiliaire absolue (HPOS) au cours de la phase d'initialisation.

11. Procédé selon la revendication 9, dans lequel la seconde unité de traitement de position (3.2, 4.2) comprend
• une unité d'évaluation de position fine (3.22) destinée à traiter les seconds signaux de position (Z16_2) pour obtenir une valeur de position fine (FPOS),
• une unité à mémoire (4.21) à laquelle est fournie la seconde valeur absolue de position (POS2) et dans laquelle la seconde valeur absolue de position (POS2) peut être stockée en tant que valeur de position grossière (GPOS), et
• une unité de calcul de valeur de position (4.23), au moyen de laquelle la valeur de position grossière (GPOS) et la valeur de position fine (FPOS) peuvent être traitées pour obtenir la seconde valeur de position absolue (POS2),
et la valeur de position auxiliaire absolue (HPOS) est stockée dans l'unité à mémoire (4.21) en tant que valeur de position grossière (GPOS) au cours de la phase d'initialisation.

12. Procédé selon l'une des revendications 9 à 11, dans lequel la première piste de graduation (1.21) est une piste de graduation absolue et la première unité de traitement de position (3.1) comprend une unité d'évaluation de position grossière (3.11) qui génère une valeur de position grossière absolue (GPOS) à partir des signaux de position (Z1_1) résultant du balayage de la première piste de graduation (1.21), qui est fournie à la seconde unité de traitement de position (3.2, 4.2) en tant que valeur de position auxiliaire (HPOS).

13. Procédé selon l'une des revendications 9 à 11, dans lequel la première piste de graduation (1.21) est une première piste de graduation incrémentale et la seconde piste de graduation (1.22) est une seconde piste de graduation incrémentale, les pistes de graduation (1.21, 1.22) ont un nombre différent de périodes de graduation et la première unité de traitement de position (4.1) génère la première valeur absolue de position (POS1) à partir des signaux de position (Z3_1, Z16_1) résultant du balayage de la première piste de division (1.21) et de la seconde piste de division (1.22), dont au moins un certain nombre de bits de poids fort sont fournis à la seconde unité de traitement de position (3.2, 4.2), en tant que valeur de position auxiliaire (HPOS).

14. Procédé selon l'une des revendications 9 à 13, dans lequel il est prévu des moyens de commutation (3.3, 3.6) au moyen desquels la valeur de position auxiliaire (HPOS) est fournie à la seconde unité de traitement de position (3.2, 4.2).

15. Procédé selon l'une des revendications 9 à 14, dans lequel le second système détecteur (2.23) comprend un premier détecteur de position (2.231) destiné à balayer la première piste de graduation (1.21) et un second détecteur de position (2.232) destiné à balayer la seconde piste de graduation (1.22) et il est prévu des moyens de commutation (3.4, 3.5) au moyen desquels des signaux de position (Z1_2, Z3_2) résultant du balayage de la première piste de graduation (1.21) sont fournis à la première unité de traitement de position (3.1, 4.1) pour le calcul de la valeur de position auxiliaire (HPOS).

16. Procédé selon l'une des revendications 9 à 15, dans lequel la première valeur absolue de position (POS1) et la seconde valeur absolue de position (POS2) sont fournies à une unité de communication (3.8) et peuvent être fournies en sortie de celle-ci à une électronique suivante.

17. Procédé selon l'une des revendications 9 à 16, dans lequel la seconde unité de traitement de position (3.2, 4.2) est initialisée immédiatement après la mise sous tension de l'appareil de mesure de position.
